# EUROPEAN PATENT APPLICATION

(11) **EP 4 757 290 A1**
(43) Date of publication of application: **10.06.2026**
(21) Application number: 24217864.8
(22) Date of filing: 05.12.2024
(51) Int. Cl.: H04L 67/12, G08C 19/02, G01P 3/00

(54) **HIGH SPEED SENSOR DEVICE, CONTROLLER, AND COMMUNICATION METHOD FOR A MECHANICAL DEVICE**

(71) Applicant: TE Connectivity Solutions GmbH, 8200 Schaffhausen (CH)
(72) Inventor: STEEG, Oliver, 8200 Schaffhausen (CH); SCHAPENDONK, Edwin, 8200 Schaffhausen (CH)
(74) Representative: Grünecker Patent- und Rechtsanwälte PartG mbB

(57) **Abstract**

A sensor device (101), for a controlled mechanical device (190), such as a rotary device, is disclosed. A logic module (141) of the device (101) is configured to process sensor input (1601) and pass Manchester encoded data (1701), determined by processing the sensor input (1601), to a communication module (131). The communication module (131), configured for wired communication of binary data, is also configured for: transmitting differential Manchester encoded data (180) onto a wired interface (150), the differential Manchester encoded data (180) being based on the Manchester encoded data (1701) from the logic module (141); and receiving differential signals (180) from the wired interface (150).

## Description

Communication systems can be used for high speed sensing and/or feedback control. Wired communication systems may be desirable when speed and low noise are important.

It is desirable to have high speed communication systems for measuring device performance, e.g. in real time. It can be further desirable to have feedback control capable of performing quickly and accurately. It can furthermore be desirable to have built-in redundancy to reduce the chance of operational errors of a controlled device, such as a controlled mechanical device, and/or rotary device (e.g. that of an electric vehicle).

Some safety implementations, such as Automotive Safety Integrity Levels (ASIL) may have redundancy and other requirements that are challenging to meet.

Herein are disclosed, to meet challenges such as those mentioned above, sensor devices, a controller, a communication system, and method of operation. Challenges may alternatively/additionally be met, of reducing or mitigating the effects of measurement error, data transmission error, and/or for providing rapid sensing measurements. Rapid measurements, with low noise, can be used for feedback control of devices, e.g. for rotary devices including those in electric vehicles.

A sensor device, for a controlled mechanical device, such as a rotary device, is disclosed, including a logic module and a communication module, e.g. for binary wired communication. The logic module is configured to process sensor input and pass data, such as Manchester encoded data, determined by processing the sensor input, to the communication module. The communication module is configured for transmitting differential Manchester encoded data onto a wired interface, and configured for receiving differential signals from the wired interface. The differential Manchester encoded data can be based on the data from the logic module.

Differential signals can provide speed and accuracy, e.g. by reducing common mode noise. Manchester encoding can allow for synchronizing and/or correcting timing, such as timing between devices. Passing and/or transmitting Manchester encoded data can provide signal edges that can be useful for timing purposes, e.g. for synchronizing clocks. This can aid in reducing timing errors of measurements. Differential signals can aid in reducing noise.

Differential signals, e.g. signals utilizing two or more wires, can be transmitted over the interface.

The communication module can be configured for transmitting and receiving differential signals. A wired interface suitable for differential signal transmission, such as a twisted pair, can have desirably low susceptibility to noise. The wired interface can be in communication with at least one controlled device, such as a rotary and/or linear device and/or an external device such as a controller. The interface can be for binary digital data.

The transmitted differential Manchester encoded data, e.g. based on data being output from the logic module, may aid in synchronization, e.g. due to the signal edges of Manchester encoded data that can be synchronized with clocks and/or oscillators of different devices that are in communication with each other.

The following further developments and/or embodiments can be combined singly or multiply, independently of each other unless indicated otherwise, for further embodiments.

The sensor device can be configured receive differential Manchester encoded data. Such signals can be compared and/or synchronized with signals, e.g. clock signals, of the logic module. Such comparison/synchronization may aid in synchronizing different components together, or allowing for timing offsets to be determined.

The communication module can include a differential transceiver, such as a CAN transceiver, a low voltage differential signaling transceiver, a FlexRay transceiver, or an RS-485 transceiver. A differential transceiver can enable differential communication and/or aid in rapid and low-error communication.

The sensor device can be communicatively coupleable to a sensitive element(s), such as a position sensor(s), such as at least one of resolver, hall sensor, magnetoresistive stack, and/or a magnetoresistance sensor. The sensor input can be received from the sensitive element(s)/position sensor(s). The sensor device can include the sensitive element(s)/positions sensor(s). Such sensors can be used for measurements of mechanical devices. For example, the sensor device (101) is communicatively coupleable to at least one magnetoresistance sensor; such as at least one of an anisotropic magnetoresistance sensor, a giant magnetoresistance sensor, or a tunnel magnetoresistance sensor.

In communication systems described herein, there can be a second sensor input from the sensitive element, which can be communicated to the sensor (e.g. over the interface). The sensor device can communicate a measurement, e.g. at least one of rotational position, phase, or rotational speed, based on at least one of the sensor input and the second sensor input. Using more than one sensor input may allow for identification of erroneous measurements. Rotational sensing can be important for determining/controlling the phase and/or angular velocity of a rotary device.

The sensor device can include an application specific integrated circuit (ASIC) and/or system on a chip (SOC). ASICs and SOCs can be small, have flexible functionality, and are reliable. The ASIC or SOC can be configured to pass/transmit/receive data in a Manchester coded format and/or differential format over the interface. The sensor device, SOC, and/or ASIC can send data on demand, such as in response to a command or request from another node on the interface. A differential format can have reduced susceptibility to noise. Manchester encoding can aid in synchronizing clocks and/or providing timing information, e.g. for correcting timing measurements between devices.

The sensor device can transmit the differential Manchester encoded data, which may include a measurement determined at least partially by the sensor input and/or an error code. The sensor device can be configured to selectably transmit the measurement and/or the error code. Being capable of transmitting different types of data can allow the sensor device to perform more than one function, e.g. in a communication system. Having selectable transmission data types can allow the sensor device to flexibly integrate into a communication system.

The sensor device can receive a command from the external device, e.g. a controller. The sensor device can determine at least one function of the sensor device based on the command. The at least one function, which can be selectable from memory, can include any one or more of: determining a measurement, e.g. from the mechanical device, based on the sensor input; determining an error code based on a comparison of the measurement of the sensor device and a second measurement of second sensor device. Alternatively/additionally, the function(s) can include determining a phase of a rotating device; and determining an error code based on a comparison of the phase and a second phase of the rotary device determined by a second sensor device.

The Manchester encoded data can be at least partially determined by the function(s) of the sensor device(s), e.g. the function(s) as set/commanded by the controller.

The function can be selected from a set of stored functions held in a memory of the sensor device. This may reduce communication time when the function is to be changed.

When multiple measurements are determined by multiple sensor devices of a communication system, the measurements can occur at least partially in parallel, e.g. overlapping in time. This can reduce the time required for an operational cycle, e.g. of measurement/feedback.

An error code can be determined, by a sensor device, at least partially by a comparison of the measurement and a received differential signal from the wired interface; the received differential signal can have encoded a second measurement received from a second sensor device which determined the second measurement based on the same or different sensor input. Having two sensor devices can provide extra safety by allowing for redundant determinations of the measurements.

The transmitted differential signal from the sensor device can be determined by an output of the function.

The sensor device can transmit differential Manchester encoded data that includes the measurement determined at least partially by the sensor input and/or the error code, such as a cyclic redundancy check. The sensor device can transmit exactly one of the measurement or the error code, e.g. in a given measurement/feedback cycle. Transmitting exactly one can be advantageous for reducing the time for communication, e.g. the time for a measurement/feedback cycle, such as when a second sensor device transmits the other of the two.

Herein a controller (e.g. an electronic control unit such as for an electric vehicle) is disclosed, for a mechanical device, such as a rotary device (e.g. an electric motor). The controller can include a processor, ASIC, FPGA, and/or SOC. The controller can be configured for wired communication, including transmitting differential signals onto a wired interface, and receiving differential signals, over the wired interface, from a first and second sensor. Transmitted/received differential signals can include differential Manchester data.

The controller can determine and transmit a control signal for a mechanical (e.g. rotary) device (e.g. adjusting a phase or angular velocity). The controller can identify the received differential signals as being first differential signals coming from the first sensor or second differential signals coming from the second sensor. The control signal can be determined based on the first differential signals which encode a measurement of the rotary device, and the second differential signals which encode an error code. The time for a measurement/feedback cycle can be reduced by having the measurement and error determination be received from different devices which can perform some operations in parallel to save time.

The controller can transmit a command for setting at least one respective function of at least one of the first and second sensor; and compare the measurement of the mechanical (e.g. rotary) device with a predicted value to determine a comparison. Determining the control signal can be based on the comparison.

The controller can transmit, e.g. at regular intervals, the command signal. This may aid in synchronizing the communications. The controller can adjust the command signal to alter a function of the sensor device. For example, if a sensor device is in an at least partially faulty state, the function of that sensor device can be altered so that it is limited to functions it can reliably perform. Alternatively, the sensor device can be deactivated, or sent into a self-test routine.

The command from the controller can be used to determine the processing function of the sensor device(s), the category of measurement (e.g. phase and/or rotational velocity and/or error determination), the timing of the transmission of the differential signal from the sensor device (e.g. the sequence of frames transmitted by the sensor device), and/or the sequence of transmissions (e.g. by determining a first and second sensor device that sequentially transmit data).

Herein is disclosed a communication system, for at least one of sensing or controlling a mechanical (e.g. rotary) device, including: a controller (e.g. as described herein), which is coupled to the wired interface; a sensor device (e.g. as described herein), coupled to the wired interface; and a second sensor device, coupled to the wired interface. Sensor devices can process, during overlapping time durations, the signal data from the sensors (e.g. after determination of the respective functions of the sensor devices by the command pulse).

In the communication system, the sensor device can determine the measurement based on the sensor input; the second sensor device can determine the error code based on the comparison of the measurement of the sensor device and the second measurement of second sensor device. This can aid in reducing the time for a communication cycle, e.g. an operational cycle. The communication system can include the rotary device. For example, there is a control signal transmitted by the controller that controls the rotary device.

The communication system can include the mechanical device and/or the sensitive element(s), such as magnetic sensor(s).

Herein is disclosed an electric vehicle that includes the communication system disclosed herein. Electric vehicles are safer when control systems and methods of operation have redundancy, reduced susceptibility to noise, features to identify and/or correct errors, and are capable of rapid measurement/feedback control.

A method of communication is disclosed, for at least one of sensing or controlling a rotary device. The method includes transmitting the command from the external device (e.g. the controller), via the wired interface, to the sensor device as described herein, and a second sensor device. The method includes: determining the measurement by the sensor device based on the sensor input; and determining the error code based on the comparison of the measurement of the sensor device and the second measurement of second sensor device. The method includes transmitting, from the sensor device, the transmitted differential Manchester encoded data that includes the measurement; and transmitting, from the second sensor device, the transmitted differential Manchester encoded data that includes the error code.

The method can include determining the function of the sensor device to include transmitting, from the sensor device, the transmitted differential signal that includes the measurement. The method can include determining the function of the second sensor device to include determining the error code based on the comparison of the measurement of the sensor device and the second measurement of second sensor device. Determining the respective functions of the sensor device and second sensor device can be based on received command(s) from the controller, e.g. in the Manchester encoded data transmitted by the controller. For example, the command from the controller sets the sensor device, or first sensor device, to transmit the measurement, and the second sensor device to transmit the error code. Such operations can allow rapid measurement/control.

The method can include processing sensor input during an overlapping duration by the sensor device and the second sensor device to determine the measurement and the second measurement. The method can include performing a sequence of: transmitting the measurement by the sensor device; subsequently transmitting the error code by the second sensor device; determining and transmitting the control signal by the controller; and repeating the sequence.

Herein "and/or" means at least one of the listed elements. For example, "A and/or B" means: only A; only B, at least A; at least B; or at least A and B. For example, "X, Y, and/or Z" means: only X; only Y; only Z; at least X; at least Y; at least Z; only X and Y; only X and Z; only Y and Z; only X, Y, and Z; at least X and Y; at least X and Z; at least Y and Z; or at least X, Y, and Z. A slash, "/" may be used to indicate "and/or". Herein an "(s)" at the end of a word means one or more; for example a sensor device(s) is one or more sensor devices.

In the following, embodiments are described with the aid of figures to aid in understanding. In the figures, elements which correspond to one another in terms of structure and/or function are provided with the same reference signs.

The combinations of features shown and/or described in the individual embodiments are for explanatory purposes only. According to the above explanations, a feature of an embodiment can be omitted if its technical effect is not important for a particular application. Conversely, according to the above explanations, a further feature can be added to an embodiment if its technical effect should be advantageous or necessary for a particular application.

In the following, several examples are described.

In the figures:
- Fig. 1: shows a communication system, according to embodiments,
- Fig. 2: shows a communication system, according to embodiments,
- Fig. 3: shows, according to embodiments, a schematic of an operational cycle,
- Fig. 4: shows, according to embodiments, a method of wired communication,
- Fig. 5: shows, according to embodiments, a schematic of communication transmissions of a controller,
- Fig. 6: shows, according to embodiments, a schematic of communication transmissions of a sensor device,
- Fig. 7: shows, according to embodiments, a schematic of communication transmissions of a sensor device,
- Fig. 8: shows, according to embodiments, a communication method,
- Fig. 9: shows, according to embodiments, a method of operation of a sensor device,
- Fig. 10: shows, according to embodiments, Manchester encoded data,
- Fig. 11: shows, according to embodiments, Manchester encoded data,
- Fig. 12: shows, according to embodiments, a schematic of communication transmissions of a sensor device, and
- Fig. 13: shows, according to embodiments, a schematic of differential Manchester encoded data.

The examples and illustrations described herein are to aid in explanation of various embodiments of the sensor device(s), controller, system, and methods (e.g. methods of operation) described herein. The methods described herein can be performed by the sensor device(s), controller, and/or communication system described herein. The sensor device(s), controller, and/or communication system can include, respectively, electronic components such as processors, integrated circuits, application specific integrated circuits, systems on a chip (SOCs), field programmable gate arrays, transceivers, and the like for the methods described herein, e.g. of communication, measurement, and/or operation.

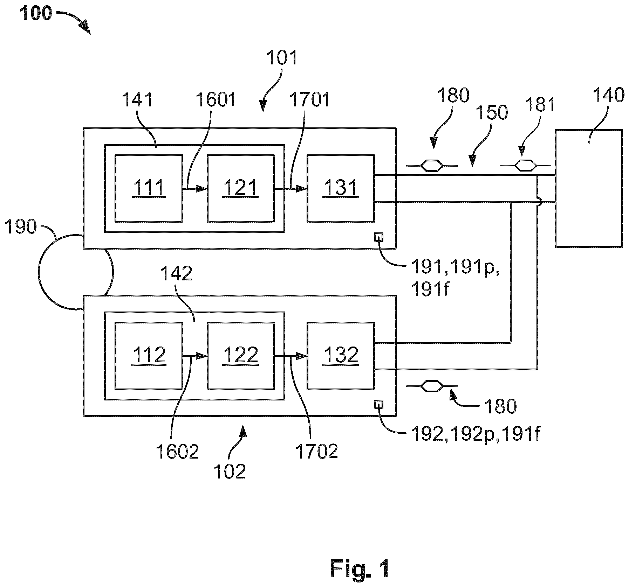

Fig. 1 illustrates, according to an embodiment, a communication system which can be used for high speed control of a device. The communication system 100 can include an interface 150 which communicatively couples the nodes, e.g. the devices wired to the interface 150, such as at least one sensor device 101, 102, and a controller 140, such as an electronic control unit (ECU), e.g. for an electric vehicle. The communication system can include a mechanical device 190, such as a rotary device. The controlled mechanical device 190 can be communicatively coupled to at least one of the sensor device(s) 101, 102, or the controller 140.

The interface 150 can support a differential signal, for example a differential signal from a differential transceiver, such as a controller area network (CAN) transceiver, a low voltage differential signaling transceiver, a FlexRay transceiver, or an RS-485 transceiver. The interface 150 can be a twisted wire pair, which may aid in reducing noise. A communication system 100 adapted for differential signaling, such as using a CAN transceiver or the like, can provide fast signaling capabilities, flexibility for attachment of multiple devices at nodes, and/or reduced susceptibility to noise.

A sensor device 101 can include at least one of a sensor input module 111, a processing module 121, or a communication module 131.

A sensor module 111 can be communicatively coupled /or include at least one sensor (e.g. physical sensor/positions sensor) such as a resolver, an inductive sensor, a hall sensor, a magnetoresistance sensor, and/or a tunnel magnetoresistance stack (TMR); or be communicatively coupled to such a sensor(s). For example, the sensor module 111 can couple to or include at least one magnetoresistance sensor; such as at least one of an anisotropic magnetoresistance sensor, a giant magnetoresistance sensor, or a tunnel magnetoresistance sensor.

The sensor device 101 can be for measuring a phase and/or rotational velocity of a rotating machine, e.g. an orientation of a rotor, e.g. in an electric motor.

The sensor device 101 can include a communication module 131 which can be adapted for binary wired communication. The sensor device 101 and/or communication module 131 can transmit/receive differential Manchester encoded data 180, 181, e.g. via the wired interface 150.

The differential Manchester encoded data 180, 181, as illustrated, can be transmitted onto an interface 150 with two or more wires. The differential Manchester encoded data 180, 181 may be encoded using a rising edge in one line and nearly or exactly synchronous falling edge in the second line (e.g. to encode a 0b1); or vice versa (for encoding a 0b0). For example, an increase in the differential voltage of two lines of the interface 150 can correspond to an encoded 0b1; and a decrease, an 0b0.

The communication module 131 can include a differential receiver, e.g. a CAN transceiver. Alternatively/additionally, the communication module 131 can include a low-voltage differential signaling (LVDS, or TIA/EIA-644) transceiver, FlexRay (ISO 17458-1 to 17458-5) transceiver, or RS-485 (TIA-485 or EIA-485) transceiver.

The sensor device 101 can include a logic module 141, which can include a sensor input module 111 and/or processing module 121. The logic module 141 can pass Manchester encoded data 1701 to the communications module 131. Manchester encoded data may aid in providing highly precise time measurements and/or reduce clocking errors for sensor determinations that are based on timing. For example, using a Manchester coded message format over a digital interface can aid in reducing measurement determinations based on time or clocking based errors. As illustrated in the example in Fig. 1, the logic module 141 and/or processing module 121 passes Manchester encoded data 1701 to the communication module 131. The Manchester encoded data 1701 can be determined by processing sensor input 1601, e.g. by the processing module 121.

The sensor devices 101, 102 can include respective memories 191, 192 which may store any one or more of previously processed sensor input 191p, 192p orfunctions 191f, 192f. Any one or more of stored functions 191f, 192f can be selected for processing the sensor input 1601 and/or Manchester encoded data 1701, e.g. based on a received command from the interface 150, e.g. from the controller 140.

The second sensor device 102 can include the same components as the first 101. The second sensor device 102 can include a logic module 142, which can include a sensor input module 112 and/or processing module 122. The logic module 142 can pass Manchester encoded data 1702 to the communications module 132. The second sensor device 102 may operate in the same way as the first 101 or may function differently, e.g. as may be determined by programming of the device 102 and/or a received command signal from the controller 140.

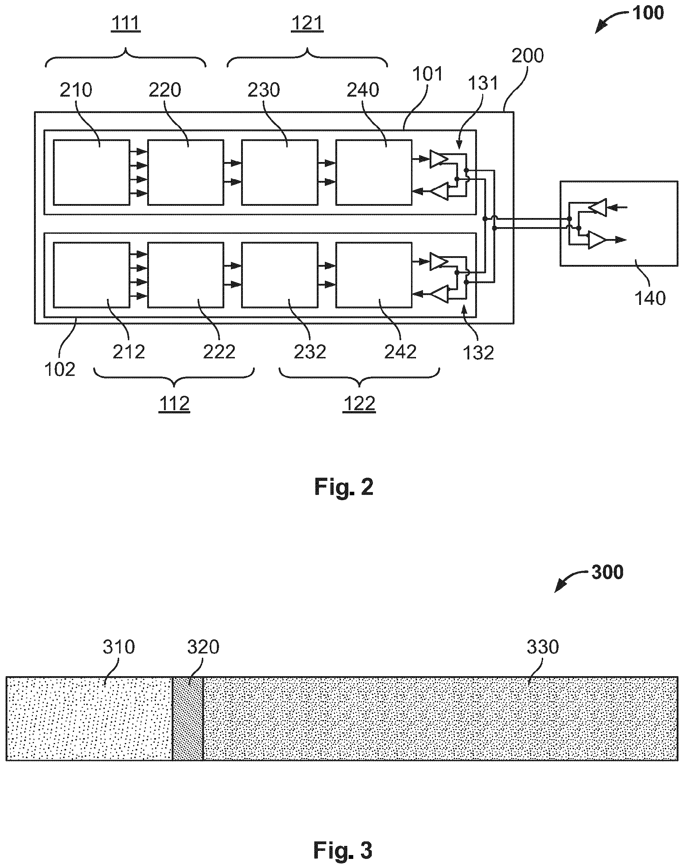

Fig. 2 illustrates, according to an embodiment, a communication system. A communication system 100 can include a sensor assembly 200 which includes at least one sensor device, such as the sensor device 101 and the second sensor device 102.

A sensor device 101, such as is described with reference to Figs. 1 or 2, can include a communication module 131, which can transmit and/or receive differential signals 1701. The communication module 131 can include a differential transceiver, such as a CAN transceiver, a low voltage differential signaling transceiver, a FlexRay transceiver, or an RS-485 transceiver.

The communication module 131, e.g. the differential transceiver thereof, can transmit the differential Manchester encoded data 180 by selectably/sequentially applying one of two differential voltage states onto the wired interface 150, such that the differential Manchester encoded data 180 is encoded by a sequence of transitions between the two differential voltage states. For example, using a CAN transceiver can operate by applying, selectably/sequentially (depending on the data, e.g. Manchester encoded data 1701, passed to the communication module 131), two differential voltage states including a dominant state and a recessive state, onto two wires of the wired interface 150. The dominant state can have a higher voltage differential and the recessive state a lower voltage differential on the wired interface 150. The differential Manchester encoded data 180 can be encoded by the transitions between differential voltage states.

A sensor device 101, such as one for measurement/control of a mechanical device, such as a rotary device, can include at least one of a physical sensor 210; an analog digital converter 220 (ADC), a digital signal processor 240 (DSP), a protocol generator 140, a communication module 131, or any combination thereof.

The sensor device 101 can include a physical sensor(s) 210, such as a magnetic sensor. A physical sensor(s) 210 can generate an analog signal, which can be converted to a digital information, e.g. by the ADC 220. The physical sensor(s) 210 and ADC 220 can be part of the sensor input module 111. Alternatively/additionally, the physical sensor(s) 210 can include a resolver, a hall sensor, or a magnetoresistance sensor such as at least one of: an inductive sensor, an anisotropic magnetoresistance sensor, a giant magnetoresistance sensor, or a tunnel magnetoresistance sensor.

A processing module 121 can include at least one of a DSP 230 and a protocol generator 240. The processing module 121 can determine a sequence of data types for transmission. Alternatively/additionally, the processing module can concatenate data and pass the encoded data, such as Manchester encoded data 1701, on to the communication module 131.

The DSP 230 and/or processing module 121 can operate on at least one of the sensor input 1601 or data encoded by the differential signals, e.g. received Manchester encoded data 181 which are received by the communication module 131, e.g. from the controller 140 and/or another sensor device 102.

Alternatively/additionally, the DSP 230 and/or processing module 121 can operate on the sensor input 1601 which is received by the DSP 230 and/or processing module 121 from the ADC 220 and/or sensor input module 111.

The protocol generator 240 can determine the framing of data, e.g. of framing of data for sending by the communication module 131. For example, the protocol generator 240 determines a sequence of bits which encode various types of data, for transmission by the sensor device 101 to the interface 150 and receipt at other nodes of the system 100.

A second sensor device 102, such as one for mechanical (e.g. rotary) device measurement and/or control, can include at least one of a physical sensor 212; an analog digital converter 222 (ADC), a digital signal processor 242 (DSP), a protocol generator 242, a communication module 132, or any combination thereof. The second sensor device 102 can be communicatively coupled to the same physical sensor 101 as any other sensor device 101, e.g. another sensor device 101 on the interface 150. The second sensor device 102 can receive sensor input 1601 from the same physical sensor 210 or another physical sensor 212.

The second sensor device 102 can include a physical sensor 212, such as a magnetic sensor. A physical sensor 212 can generate an analog signal, which can be converted to a digital information, e.g. by the ADC 222. The physical sensor 212 and ADC 222 can be part of the second input module 112. Alternatively/additionally, the physical sensor(s) 210 can include a resolver, a hall sensor, or a magnetoresistance sensor such as at least one of: an inductive sensor, an anisotropic magnetoresistance sensor, a giant magnetoresistance sensor, or a tunnel magnetoresistance sensor.

A second sensor device 102 can receive sensor input 1601 from the same physical sensor(s) 210 as any other sensor device 101 of the communication system 100. Alternatively/additionally, the second sensor device 102 can have at least one unique sensor, such as a second physical sensor(s) 212.

A processing module 122 can include at least one of a digital signal processor (DSP) 232 or a protocol generator 242.

The DSP 232 and/or processing module 121 can operate on at least one of the sensor input 1601 or data encoded by the differential signals 180 that is received by the communication module 132. The function of the DSP 232 and/or processing module 121 of the second sensor 102 can be as described for the sensor 101.

Alternatively/additionally, the DSP 240 and/or processing module 121 can operate on the sensor input 1601 which is received by the DSP 240 and/or processing module 121 from the ADC 220 and/or sensor input module 112.

The processing module 122 can include the DSP 230 and protocol generator 240. The processing module 122 can determine frame packaging and/or pass data, e.g. Manchester encoded data, to the communication module 132.

Alternatively/additionally, the DSP 232 and/or processing module 122 can operate on the sensor input 1601 which is received by the DSP 240 and/or processing module 121 from the ADC 220 and/or sensor input module 112.

The protocol generator 242 can determine the framing of data, e.g. of framing of data for sending by the communication module 132. For example, the protocol generator 424 determines a sequences of bits which encode various types of data, for transmission by the sensor device 101 to the interface 150 and receipt at other nodes of the system 100.

Fig. 3 illustrates, according to an embodiment, a schematic of an operational cycle. An operational cycle 300 can last for a few tens of microseconds, such as less than 50, 40, 30, 20 or 10 microseconds. It is desirable for operational cycles to be short to allow for rapid feedback and/or rapid evaluation of measurement(s). Alternatively/additionally, short transmission times can allow the interface 150 to be used for other transmissions.

An operational cycle 300 can include data acquisition duration 310, a trigger duration 320, and a data transmission duration 330. The data acquisition duration 310 can include data processing time. The trigger duration 320 can precede data transmission, e.g. data transmission from the sensor device(s) 101, 102 to the interface 150. The trigger duration 320 may include time for a trigger 460 from the controller 140 to be received by the sensor device(s) 101, 102. The data acquisition duration 310, e.g. for acquisition of sensor input 1601 and possibly at least partial processing thereof (e.g. by an ADC 220, DSP 230 and/or logic module 141), can occur before and/or during the trigger duration 320. Data transmission may be a rate determining step of an operational cycle 300.

A trigger 460 can be received from the interface 150, which may have originated from the controller 140 and/or a second sensor 102. The trigger 460 may carry encoded data used by the receiving node, e.g. the sensor device 101, e.g. encoded data, that when read by the sensor device(s) 101, 102 determines a function of the sensor device 101. A function can be to determine a measurement(s) based on sensor input 1601 and/or determine an error code 850.

The operational cycle of Fig. 3 can be representative of the operation of a sensor device 101. A sensor device 101 can acquire data, e.g. sensor input 1601 during the data acquisition duration 310; be triggered during the trigger duration 320, which may determine the processing function(s) of the sensor device 101; and subsequently transmit, during the data transmission duration 330, differential signals 180 onto the interface 150. The transmitted differential signals 180 can encode the output of the logic module 141 of the sensor device 101.

Alternatively/additionally, the sensor input 1601 can be processed, e.g. by the logical module 141, before the trigger 460 is received. The processed sensor input 191p can be stored in memory 191. Receiving a trigger 460 may cause the sensor device 101 to retrieve the processed sensor input 191p. Any portion of the processed sensor input 191p can be packaged for communication onto the interface 150, e.g. as a differential signal 180. The retrieved processed sensor input 191p can optionally be further processed before encoding a result (e.g. a measurement or measurements) as a differential signal 180 and transmission onto the interface 150 by the communication module 131.

The steps of the operational cycle 300 can be repeated. For example, after the data transmission duration 330 of the operational cycle 300 is complete, the sensor device 101, 102 can begin data acquisition 410 and await a trigger 460. Alternatively/additionally, some processing functions can proceed before the trigger arrives. For example, processing of sensor input 1601 can occur, and the processed sensor input 191p can be stored in memory 191, e.g. for retrieval after the arrival of the trigger.

Data acquisition 410 can be directly or indirectly from the sensor module 111 (such as a physical sensor and/or position sensor as described herein). Alternatively/additionally, data acquisition 410 can be from a memory 191, such as a buffer, which may be communicatively coupled to the sensor module 111. The memory 191 and/or buffer can be part of the sensor device 101, sensor module 111, physical sensor 210, and/or ADC 220.

For example, the sensor device(s) 101 can continuously receive input from the sensor module 111, which may be communicatively coupled (e.g. remotely, e.g. by wire) to the sensor device(s) 101. The continuously received input can be stored, e.g. in a memory 191 and/or a buffer, and the stored input can be temporarily stored, e.g. before data acquisition 410 and/or further signal processing. The data acquisition 410 can acquire input from the memory/buffer. The trigger 460 can trigger acquisition of sensor input 1601 from the memory/buffer, e.g. acquisition of sensor input 1601 from a set duration of time, e.g. time duration over which the sensor module 111 has generated multiple data points. The set duration of time can be determined by the arrival time of the trigger 460 at the sensor device 101, and/or of the timing of a clock or oscillator of the sensor device 101. Alternatively/additionally, the data acquisition can be from a set data size from the memory 191 and/or buffer. The set duration and/or data size may also be determined, at least partially, from a command 530 from the controller 140.

Alternatively/additionally, the data acquisition 410 can be active intermittently, such as at regular intervals. The data acquisition 410, and/or intervals thereof, may be determined by the trigger 460, which may be at regular intervals. For example, the trigger 460 may induce data acquisition over a time period immediately before, or possibly immediately after the trigger 450 (e.g. the rising or falling edge thereof). It may be advantageously fast to acquire data 460 over a time interval immediately preceding the trigger 460. Such a time interval can be variable, or set.

Variable control of the time interval of acquire data 460 can be determined by a command 530 from the controller 140, which is received by the sensor device 101. Alternatively/additionally, the time interval may be determined indirectly by setting the size (e.g number of bits or bytes) of the sensor input 1601 that is acquired 410. The size can also be determined by the command 530.

Alternatively/additionally, the data acquisition 410, e.g. the timing thereof, can be determined, at least partially, by a clock/oscillator of the sensor device 101 and/or command 530.

The sensor device(s) 101 and/or controller 140 can be configured to perform the operational cycle 300 described herein. For example, the sensor device(s) 101 may acquire sensor input 1601, transmit differential data 180, and/or receive a trigger from a controller 140 and/or a second sensor device 102 (e.g. via the interface 150). The controller 140 can transmit a trigger during the trigger duration 320 and/or receive differential data 180 from one or more sensor devices 101, 102 during the data transmission duration 330.

Alternatively/additionally, at least some data processing can occur during and/or after the trigger duration 320. The data transmission duration 330 can be the last of each operational cycle 300, e.g. the last operational function of the sensor device(s) 101, 102 of each cycle 300.

An operational cycle 300 can correspond to a duration for a message of the communication system 100. The message may include sequential transmissions from any number of nodes 101, 102, 140 of the communication system 100. Alternatively/additionally, an operational cycle 300 has a duration that includes, sequentially, transmissions from the controller 140, a sensor device 101, and a second sensor device 102. The sequence and/or duration of the transmissions from the nodes may be determined by the controller 140; the determination of the sequence and/or duration of transmissions from the sensor device(s) 101, 102 can be communicated by a command from the controller 140.

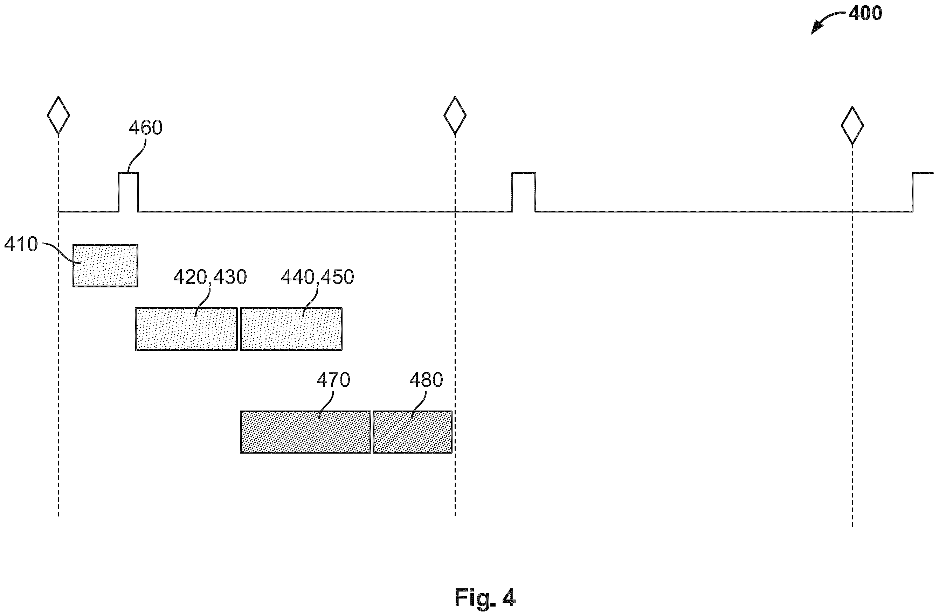

Fig. 4 illustrates a method of wired communication, according to an embodiment. The method 400 can be for sensing and/or controlling, e.g. of a controlled mechanical device 190 such as a rotary device. The method 400 illustrated in Fig. 4 can utilize the operational cycle as described herein, e.g. the operational cycle 300 described with reference to Fig. 3. The method of communication 400 can utilize repeating signals, or repeating signal structures.

One or more sensor devices 101, 102 can acquire 410 data, e.g. sensor input 1601, and subsequently determine 420, such as by calculation and/or operation of a function on the sensor input 1601, one or more measurement(s), such as an angle, phase, and/or angular velocity. Alternatively/additionally, a look-up table can be used to determine 420 the measurement(s). Transmission 430 of the determined measurement(s) can occur subsequent to the acquisition 410, and during or after the determination 420. The transmission can be to the interface 150, and the transmission can be received by a controller 140 and/or another sensor device 102.

The sensor device(s) 101, 102 can perform additional functions after transmission 430 of the determined measurement(s), such as perform a redundancy check 440, e.g. a cyclic redundancy check (CRC), which can determine an error of the measurement(s) determination and/or error of the transmission of the measurement(s). The error may be within a tolerance or outside of a tolerance. The sensor device(s) 101, 102 can transmit an error code 450 such as an error code determined by comparing the determined error to the tolerance.

In an embodiment, the sensor device 101 transmits measurement(s) determined from the sensor input 1601, and a second sensor device 102 transmits the error code 450.

A controller 140 can transmit a trigger 460 which is received by the sensor device(s) 101, 102. The trigger 460 can induce at least one of the determination of a measurement(s) 420, putting the sensor device 101 in an inactive state, to undergo an internal test, or to reach the end of data acquisition 410 (e.g. at least for that operational cycle 300). The trigger duration 320 can overlap the data acquisition 410. The determination of the measurement(s) 420 can overlap the trigger duration 320, or occur subsequently, e.g. if the trigger 460 encodes a change of function for the determination of the measurement(s) 420.

The controller 140 can receive the measurement(s) that are transmitted 430 by the sensor device(s) 101, 102. The controller can compare 470 a predicted value for the measurement(s). The predicted value can have been determined by the controller 140 based on previously received measurement(s). The controller 140 can transmit a control signal 480, e.g. based on a difference between the predicted value of the measurement(s) and the received measurement(s) transmitted 430, e.g. in the current operational cycle 300. The control signal 480 can alternatively/additionally be based on user input, such as from a throttle control/brake.

For example, the controller 140 compares the angle of a rotor, as determined by the sensor device(s) 101, 102 to a predicted angle of the rotor based on previous determinations of the angle. After the comparison 470, the controller 140 transmits a control signal 480, e.g. a pulse width or a digital signal sent to a pulse generator, which can be used to adjust the angle of the rotor.

The controller 140 can include or be communicatively coupled to a pulse width modulator that can be used for control of the controlled mechanical device 190, e.g. a rotary device, e.g. the same rotary device which is providing, directly or indirectly, the sensor input 1601.

The controller 140 can determine the control signal 480 based on the error code 450. Alternatively/additionally, the controller 140 can determine to forgo updating a control signal, based on the error code 450. Alternatively/additionally, the controller 140 can determine to ignore the transmitted measurement(s), at least for that operational cycle, based on the error code 450.

For example, the sensor device 101 may be partially malfunctioning, such as in a state where it can less reliably determine the measurement(s). The command can be determined based on the error code 450 received by the controller 140.

The controller 140 can determine, e.g. based on the error code 450, at least one of: to command inactivation of at least one of the sensor device(s) for at least one operational cycle; to command, for at least one operational cycle, a sensor device to undergo an internal test; to command a sensor device 101 to be reset; or to command the sensor device(s) to change function.

Fig. 4 also shows an operational cycle 300 that includes transmission of a control signal 480, e.g. a feedback signal. The control signal 480 can cause a change in state of the controlled mechanical device 190. For example, a rotational state of a rotary device can change in velocity and/or undergo a phase shift. The change can be based on the transmitted control signal 480.

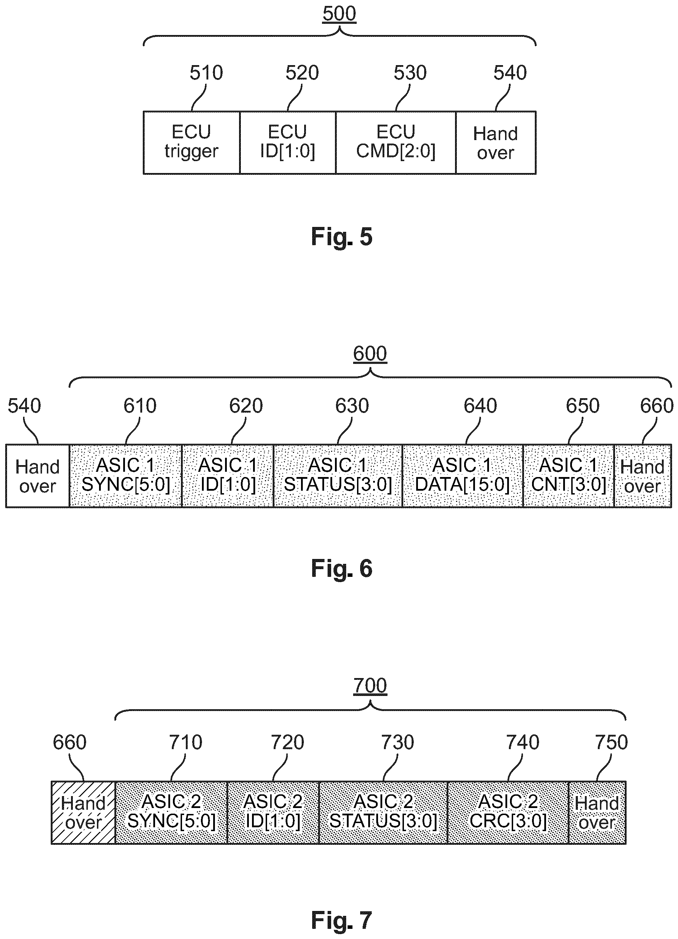

Figs. 5, 6, and 7 show communication transmissions, according to embodiments. The method 300 can include a controller transmission 500, and at least one sensor device transmission, e.g. first sensor device transmission 600 and a second device transmission 700. The transmission can be to the interface 150. Figs. 5, 6, and 7 can be illustrative of framing of the communications/messages.

Any one or more nodes 140, 101, 102 of the interface 150 can receive transmissions from other nodes 140, 101, 102.

The nodes 140, 101, 102 of the communication system 100 can be configured to collectively transmit a message having a duration of less than 50, 40, 30, or 20 microseconds. Alternatively/additionally, the transmitted messages can include sequential transmissions of the controller 140, and sensor(s) 101, 102. The transmitted messages can begin with the trigger 460 from the controller 140; and include sequential transmissions from the sensor device(s) 101, 102. The message(s) can end with a control signal 480 transmitted from the controller 140, e.g. which controls a controlled mechanical device 190, e.g. a rotary device state.

The message(s) can include, for example, any one or more of the transmissions described with reference to Figs. 5, 6, or 7. For example, each message includes, sequentially, a controller transmission 500, a sensor device transmission 600, and a second sensor device transmission 700. There can be data acquisition 410 before and/or during the trigger 460.

In Fig. 5 a controller transmission 500 is illustrated, according to an embodiment. Fig. 5 may illustrate the framing of transmitted data from the controller 140. The controller transmission 500 can include at least one of a timing trigger 510, an identification 520, a command 530, and a handover 540. The controller transmission 500, or any part thereof, can alternatively/additionally be regarded as a trigger 460 that lasts over a trigger duration 320. The command 530, for example, may be read by the other devices of the node, e.g. sensor devices 101, 102. The command 530 can determine the function(s) of the sensor devices(s) 101, 102. The sensor device(s) 101, 102 can set their function(s) based on the command 530. The function(s) of the sensor device(s) 101, 102 can be different for each sensor device 101, 102, e.g. depending on the command 530. There can be redundancy of functions across sensor device(s) 101, 102.

The identification 520 can be received by the sensor device(s) 101, 102. The identification 520 can be used to determine how to handle the received transmission 500. For example, when the controller transmission 500 is received, the sensor device(s) 101, 102 can determine that the transmission originated from the controller 140. The sensor device(s) 101, 102 can then subsequently determine their respective functions (which may be different, have some redundancy, or be identical), their priority (e.g. in which order the sensor(s) 101, 102 will transmit their differential signals 180 to the interface 150. The sensor device(s) 101, 102 can determine their respective functions and/or priority based on the command 530.

The handover 540 of the controller transmission 500 can indicate that the controller transmission 500 is finished, and/or induce the subsequent device, or device next in priority in the communication system 100, to begin transmission. For example, after the handover 540 of the controller transmission, the sensor device 101 may begin transmitting.

Fig. 6 illustrates a handover and a sensor device transmission, according to an embodiment. The handover 540 can be the handover 540 of the controller transmission 500. Fig. 6 may illustrate the framing of transmitted data from the sensor device 101. The framing of transmitted data may be determined by the sensor device 101, and/or determined from the received command 530 from the controller 140. The sensor device transmission 600 can include at least one of a sync 610, an ID 620, a status 630, data 640, a counter 650, and a handover 660. The sensor device transmission data 640 can include encoding of the measurement(s), e.g. phase data of a rotary device, that are determined by the sensor device 101. The sensor device transmission data 640 can be of fixed length. Alternatively/additionally, the sensor device transmission data 640 can include the transmitted error code 450.

The framing may determine the sequence of any one or more of the sync 610, ID 620, status 630, data 640, counter 650, and/or the number of bits of each. Alternatively/additionally, the framing may be determined by the protocol generator 240 based on the command 530 received from the controller 140.

The sync 610 can be used by other nodes to make determinations about relative timings. For example, the sync 610 can be used to determine clock offsets, e.g. so that timed measurements from one device to another can be accurately compared. For example, any number of the devices at the nodes may have a respective internal clock that may drift with respect to the clock of any number of other devices on the interface 150. The sync 610 can aid in adjusting any clock of any device or any timing determination of any device on the interface, e.g. so that the measurement(s) (such as those which involve a timing component) that were determined 420 by another device such as a sensor device 101, 102 can be accurately compared.

The ID 620 can be used by other devices to determine how they will use the sensor communication 600. For example, the other devices (e.g. the second sensor 102 and/or controller 140) may process the data received from the sensor device 101, e.g. subsequent to the status transmission 620, or may ignore the data from the sensor device 101. Alternatively/additionally, the status 630 can be used by other devices to determine how they will use the sensor communication 600. For example, the controller 140 may receive the status 630 and determine to wait for further data and/or further transmissions from the sensor device 101. While waiting, the controller 140 can perform other functions. Alternatively/additionally, the status 630 can be used for diagnostics, such as for the controller 140 to determine if the sensor device 101 is functioning within a tolerance range, e.g. not transmitting data that is outside of usual expectations.

The counter transmission 650 can be for determining errors in the communication protocol. Alternatively/additionally, the counter can allow determination that the device is malfunctioning, such as failing to update data for transmission. For example, a sensor device 101 in an error state can be when the sensor device 101 sends faulty data, e.g. by repeatedly sending the same data, without a determination 420 of the measurement from updated sensor input 1601. The counter transmission 650 may increase proportional to the number of determinations 420.

The handover 660 can induce the next device, such as the second sensor device 102, to begin transmission. Alternatively/additionally, the handover 660 can mark the end of transmission from the sensor 101. Alternatively/additionally, the handover 660 can induce the controller 140 to begin any of its transmissions.

Fig. 7 illustrates, according to an embodiment, a handover and a sensor device transmission. For example, Fig. 7 illustrates a transmission 700 from the second sensor device 102, which is subsequent (e.g. immediately subsequent) to the sensor device transmission 600. For example, the sensor device handover 660 precedes the second sensor device transmission 700.

The handover 660 can be the handover 660 from the sensor transmission 600. The second sensor device transmission 700 can include at least one of a sync 710, an ID 720, a status 730, data 740, and a handover 760. The second sensor device transmission data 740 can include the transmitted error code 450, which may be determined by a cyclic redundancy check. Alternatively/additionally, transmission data 740 can include encoding of the measurement(s), e.g. phase data of a rotary device, that are determined by the sensor device 101. The second sensor device transmission data 740 can be of a fixed length, e.g. 16 bits. The second sensor device transmission data 740 can include signal diagnostic information.

The sync 710 can be used by other nodes to make determinations about relative timings. For example, the sync 710 can be used to determine clock offsets, e.g. so that timed measurements from one device to another can be accurately compared. For example, any number of the devices at the nodes may have a respective internal clock that may drift with respect to the clock of any number of other devices on the interface 150. The sync 710 can aid in adjusting the clock of any device or any timing determination of any device on the interface, e.g. so that the measurement(s) (such as those which involve a timing component) that are determined 420 by another device such as a first sensor device 101 can be accurately compared by a second sensor device 102.

The ID 720 can be used by other devices to determine how they will use the second sensor communication 700. For example, the other devices (e.g. the controller 140) may process the data received from the second sensor device 102, e.g. subsequent to the status transmission 720, or may ignore the data from the second sensor device 102. Alternatively/additionally, the status 730 can be used by other devices to determine how they will use the second sensor communication 700. For example, the controller 140 may receive the status 730 and determine to wait for further data and/or further transmissions from the sensor device 102. While waiting, the controller 140 can perform other functions.

The handover 750 can induce the next device, such as the second sensor device 102, to begin transmission. Alternatively/additionally, the handover 750 can mark the end of transmission from the second sensor 102. Alternatively/additionally, the handover 750 can induce the controller 140 to begin any of its transmissions.

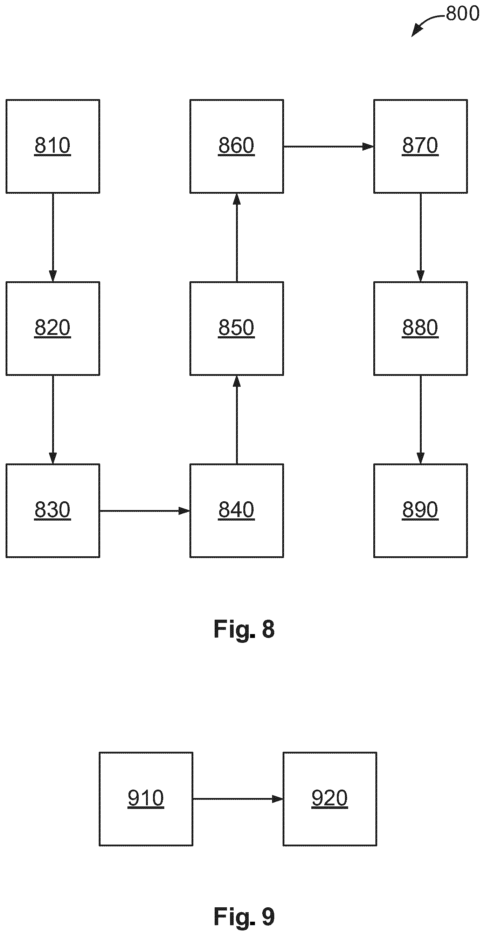

Fig. 8 illustrates, according to an embodiment, a communication method. A communication method 800 can include a sensor device 101 determining a measurement(s) 810 based on sensor input 1601, and transmitting onto the interface 150 the measurement(s) 810. The sensor device 101 may forgo transmitting any error code such as a cyclic redundancy check, or CRC. The CRC transmission, for example, can be performed by another sensor device, such as a second sensor device 102. This may allow for adequate error determination while reducing transmission time for the communication.

The communication method can include a second sensor device 102 which determines measurement(s) 820 based on sensor input 1601. The sensor input 1601 used by the second sensor device 102 may be from the same physical sensor(s) 210 providing the sensor input 1601 to any other sensor device 101; alternatively, the sensor input 1601 to the second sensor device 102 may come from one or more physical sensor(s) 210 that are not shared. The physical sensor(s) 210 can provide redundant and/or complementary sensor input 1601, for determining the measurement(s).

Any sensor device 101, 102 on the interface 150, such as the second sensor device 102, and/or the controller 140, can receive 830 measurement(s) from any other sensor device 101, e.g. through the interface 150 as a differential signal 180, e.g. from the other sensor device 101.

The second sensor device 102 can compare the measurement(s) 840 determined by the second sensor device 102 to the measurement(s) received from any other sensor device 101. The second sensor device 102 can determine an error code 850, e.g. based on the comparison of the measurement(s). The error code can be transmitted 860.

For example, if the measurement(s) determined by the second sensor device 102 are within a tolerance to the measurement(s) determined by the first sensor device 101, which have been received by the second sensor device 102 (e.g. as differential data 180 from the interface 150) then the second sensor device 102 can transmit 860 an OK error code, such as the cyclic redundancy check value(s) determined from the differential data 180 sent by the sensor device 101 and received by the second sensor device 102, the differential data 180 having encoded the measurement(s) determined by the first sensor device 101.

In another example, the measurement(s) determined by the second sensor device 102 are not within a tolerance margin to the measurement(s) determined by the first sensor device 101. The second sensor device 102 can transmit 860 an error code indicating a different status, e.g. not OK. For example, the CRC determined from the differential data 180 from the first sensor device 101 can be inverted and transmitted 860 by the second sensor device 102 as the error code.

The controller 140 can receive 830 the differential data 180 from the sensor device(s) 101, 102. The controller 140 can determine 870, based on the differential data 180 from the first sensor device 101, an error code, such as a CRC value, based on the received measurements 830.

The controller 140 can compare 880 the error code (e.g. CRC value) determined from the received differential data 180 from the first sensor device 101 to the error code (e.g. CRC value) received from the second sensor device 102 (e.g. the CRC value transmitted 860 by the second sensor device 102).

Based on the comparison 880 of error codes and/or based on the received measurement(s) 830, the controller 140 can determine 890 a control signal 480. For example, receiving a not OK code, e.g. an inverted CRC, can indicate that the determination of the measurement(s) is unreliable, e.g. because two separate determinations at the first and second sensor devices 101, 102 were outside of a tolerance range (e.g. got substantially different results). The controller 140 can determine the control signal 890, e.g. for adjusting a state of a device such as the position, phase, angular velocity, and/or speed of a rotary device, based at least partially on the error code. For example, the controller 140 may provide no change in the control signal 480 when an inverted CRC is received, or may provide a control signal 480 based on a predicted state (e.g. position and/or speed of the rotary device) determined from previously received differential data 180 from the sensor(s) 101, 102.

Herein, the control signal 480 can be a pulse width modulation. The control signal 480 can be used to adjust an angular position or angular velocity of a rotary device 190.

More sensor devices are possible. For example, using a third sensor device is possible, as that may allow for the determination of which of two other sensors is faulty. The third sensor device can perform the same or similar functions as the second sensor device 102, e.g. comparing the measurements of the third sensor device to the differential signals 180 that encode the measurements from the first and second sensor devices 101, 102. The data from a sensor device 101, 102 can be ignored if the data from that sensor is outside the tolerance range, and the other data from the other two sensors is within the tolerance range. For example, the operation cycle 300 can forgo an update to the control signal 480.

Alternatively, the error data may include data for correcting errors (e.g. CRC data). Received data can be utilized after correction using the CRC data, e.g. for making determinations as described herein, e.g. for determining a control signal 890.

Fig. 9 illustrates, according to an embodiment, a method of operation of a sensor device.

A sensor device 102 can receive a command 910, e.g. from the interface 150, which may have originated from the controller 140 or another sensor 101. The sensor 101 that receives the command can determine 920 a function(s) based on the command, such as by selecting from a set of stored functions 191f in memory 191.

The sensor device 101, 102 can perform one or more functions based on the determined function(s). For example, the determined/performed function(s) may include at least one of: determining a measurement(s) 810 based on sensor input 1601; transmitting onto the interface 150 the measurement(s) 810; receiving 830 any measurement(s) from any other sensor device 101; comparing the measurement(s) 840 determined by the sensor device 102 to another sensor device 101; determining an error code 850, e.g. based on the comparison of the measurement(s); or transmitting 860 the error code.

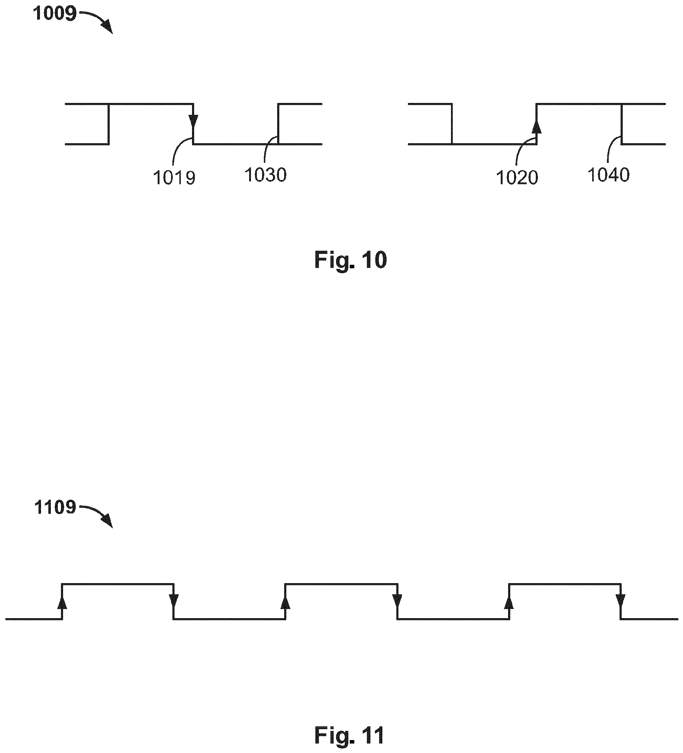

Fig. 10 illustrates, according to an embodiment, Manchester encoded data transmissions. A Manchester encoded data transmission 1009 can digitally encode data. A 0 can be encoded as a falling edge 1019, and a 1 can be encoded as a rising edge 1020. At the end of each bit, there may be an additional rising or falling edge 1030, 1040, depending on the subsequent bit. The multiple falling and rising edges of Manchester encoded data transmissions 1009 can be useful for synchronizing clocks. Each rising/falling edge can indicate a tick of a clock

Fig. 11 illustrates, according to an embodiment, a Manchester encoded data transmission. The transmission 1109 of Fig. 11 can encode a six bit sequence 0b101010. Each rising/falling edge encodes one bit. For example, the trigger 460 transmitted by the controller 140 can be the six bit sequence 0b101010, as depicted in Fig. 11.

The trigger 460 can be used for synchronizing clocks. For example, the sensor(s) 101, 102 can use the trigger 460, received from the controller 140 in the form of a Manchester encoded bits, to adjust or provide a known offset to the measurement determinations of the sensor device(s) 101, 102. The trigger 460 can be transmitted on the interface, e.g. on one wire of the interface 150. For example, a trigger 460, in the form of Manchester encoded bits, can be transmitted on one wire of the interface 150.

Digital signals transmitted, e.g. differential signals 180, by the communication module 131 can be synchronized with the Manchester encoded data 1701 passed to the communication module 131. Alternatively/additionally, the differential signals 180 transmitted by the communication module 131 can include timing data, e.g. for comparing the timing of the Manchester encoded data 1701 of the sensor device 101 with the timing of differential signals 180 of the wired interface 150, and/or an internal clock(s) at other nodes of the system (e.g. other sensor devices 102 and/or the controller 140). It can be advantageous for timing data to be transmitted from the sensor device 101, e.g. by the differential signals 1701 on the interface 150, to provide a way to compare measurements/determinations made by different devices 101, 102, 140, or nodes, on the interface 150. It may be possible to transmit timing data that can at least temporarily allow synchronization of clocks of different devices on the interface.

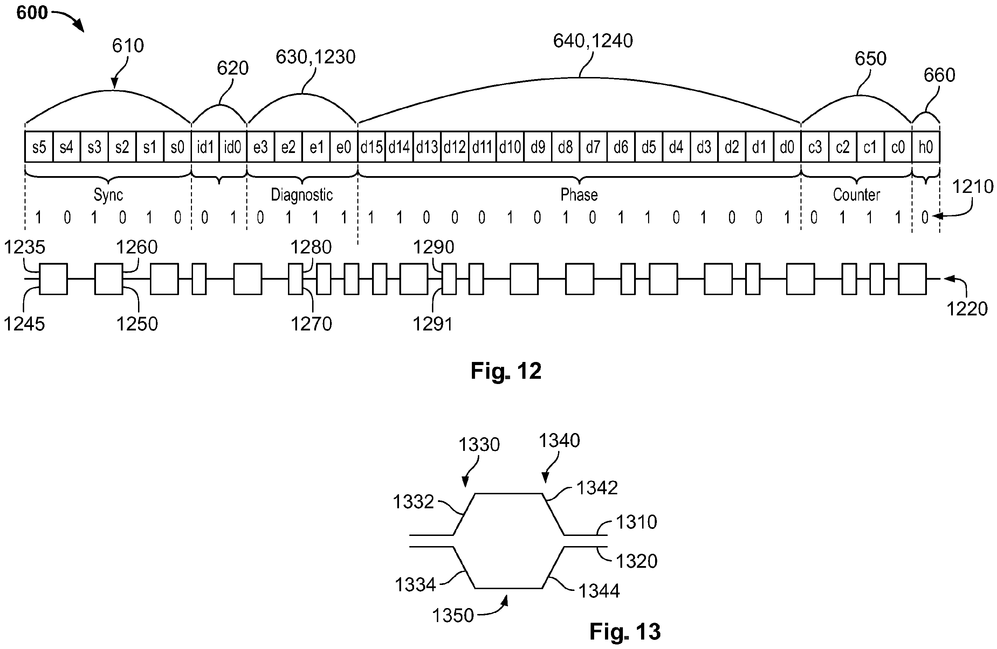

Fig. 12 illustrates, according to an embodiment, a sensor device transmission. The sensor device transmission 600 can include at least one of a sync 610, an ID 620, a status 630, data 640, a counter 650, and a handover 660. Fig. 12 is useful for understanding the differential Manchester encoding. Bits 1210 can be transmitted in frames (e.g. in 610, 620, 630, 640, 650, 660), such as are indicated in Fig. 12. The differential Manchester encoded transmission stream 1220 can transmit the bits 1210, as illustrated.

The communication module 131, coupled to an interface 150 such as a two-wire interface, can transmit the differential Manchester encoded transmission stream 1220. As illustrated, the sync 610 can have six bits; the ID 620, two bits; the diagnostic 1230 and/or status 630, four bits; the data 640 such as phase data 1240, sixteen bits; and the counter 650, four bits.

The differential Manchester encoded data may be transmitted over two wires of the interface 150. Changes to the differential voltage between the two wires can encode the bits 1210. The encoded bits 1210 may correspond to, for the case of a 0b1, a rising edge 1235 on a first wire and a nearly or exactly synchronous falling edge 1245 on the second wire; or for the case of a 0b0, a falling edge 1260 on the first wire and a nearly or exactly synchronous rising edge 1250 on the second wire.

An encoded 0b1 may correspond to a transition to a relatively high differential voltage, and an 0b0 to a transition to a relatively low differential voltage. The encoding can be differently poled than described, e.g. oppositely poled.

The stream 1220 may include rising/falling edges 1270, 1280, carried on the wires, between encoded bits, e.g. when sequential bits have the same value. For example, the stream 1220 that includes the bit sequence 0b00 (two sequential 0 values) includes, for the first wire, two falling edges, with an intervening rising edge 1290 on the first wire, between the bits; the second wire has two rising edges with an intervening fall 1291. Similarly, the streamed bit sequence 0b11 includes, for the first wire, two rising edges, with an intervening falling edge 1280 between the bits; the second wire has two falling edges with an intervening rise 1270.

Rising/falling edges between encoded bits can be referred to as intervening edges, e.g. intervening rising edges 1290 and intervening falling edges 1291. The communication module 101 of any embodiment herein can be configured to transmit intervening rising and/or falling edges, between sequentially encoded bits, e.g. when transmitting differential Manchester encoded data. The intervening edges 1270, 1280; and 1290,1291 may also be used for synchronizing clocks and/or comparing timing between devices.

Fig. 13 illustrates, according to an embodiment, a schematic of a differential Manchester encoded data. Bits can be represented by a differential rise or fall between two wires of the interface 150. For example, one of the wires carries a first trace 1310 and a second wire carries a second trace 1320. A differential Manchester encoded 0b1 bit 1330 may correspond to a rising edge 1332 in the first trace 1310 and a falling edge 1334 in the second trace 1320. A differential Manchester encoded 0b0 bit 1340 may correspond to a rising edge 1344 in the second trace 1320 and a falling edge 1342 in the first trace 1310. Alternative schemes can result in a different correspondence between rising/falling edges and the encoded bits 0b0 and 0b1. For example, the polarities can be reversed. Alternatively/additionally, such as when a CAN transceiver is used, regions of the differential signal with a constant voltage can be referred to as dominant and recessive states. For example, the relatively high voltage region1350 between the consecutive bits 0b1 and 0b0 can be a dominant state, and the preceding and following relatively low voltage regions can correspond to a recessive state.

It is to be appreciated that the encoding of bits according to the differential Manchester scheme described herein is associated with the edges, e.g. at 1330 and 1340. The sequence of dominant state 1350 and/or recessive states may not be decoded to generate the encoded bit sequence of a transmission. As described with reference to Fig. 12, there can be intervening edges 1270, 1280, 1290, 1291, e.g. when the stream 1220 of differential Manchester encoded data includes consecutive noninverting bits. Similarly, there can be intervening dominant/recessive states. Intervening edges, during decoding of a received differential Manchester encoded stream, may be ignored except for the purposes of timing, such as for determining timing offsets.

The sensor device described herein may be used for measurement/control of a mechanical device, e.g. a rotary device. Sensors described herein can be for generating electrical signals for determining/measuring physical measurements, e.g. from mechanical devices. Mechanical devices, herein, can be controlled mechanical devices, e.g. communicatively coupled to the controller and/or sensor devices.

Differential signals described herein can include differential Manchester encoded data. "Differential transmission" as used herein can mean that the transmission includes changes in a relative voltage, or relative changes in the voltage, e.g. over time in order to transmit data, between two wires. Herein binary communication can mean digital communication using encoded 1s and 0s. The sensor devices, controller, communication system, and/or methods described herein can be configured for data formats other than Manchester encoding. For example, in an embodiment that can be combined with any other embodiment described herein: the logic module of the sensor device and/or the processing module of the sensor device can pass digitally encoded data to the transceiver; alternatively/additionally, the sensor device, e.g. the transceiver thereof, can transmit digitally encoded data onto the wired interface, the transmitted data being other than Manchester encoded.

Herein, to operate can mean to process data and/or input (e.g. an analog signal input, a digital signal input or any combination thereof), such as to apply a function, such as a logical function (a digital logic function), to the data and/or input. Herein, operational function, processing function, and function can be used interchangeably.

Herein, differential signals transmitted or received on a wired interface can be according to the methods described herein. The methods described herein can allow for high speed communication while reducing unwanted noise. Herein differential signals can be digital signals such as binary digital signals.

Herein, transceivers for communication may use, as a physical layer, controlled area network (CAN) transceivers, low-voltage differential signaling (LVDS, or TIA/EIA-644) transceivers, FlexRay (ISO 17458-1 to 17458-5) transceivers, or RS-485 (TIA-485 or EIA-485) transceivers. TIA/EIA stands for Telecommunications Industry Association, and Electronic Industries Alliance. Alternatively/additionally, a CAN transceiver, LVDS transceiver, FlexRay transceiver, or RS-485 transceiver can be used to transmit differential Manchester encoded data. The communication module(s) described herein can be include a transceiver for low-voltage differential signaling, FlexRay, RS-485, and/or CAN.

The communication module(s) of the sensor device described herein can be communicatively coupleable, over the wired interface described herein, to an external device such as a controller and/or another sensor device.

Herein, a "module" can be a virtual module. For example, a module can be an encoded processor or functionality, such as a programmed functionality, thereof. One or more processors, integrated circuits, ASICs, SOCs, FPGAs, or the like can operate as a module. A module can be a software and/or hardware module in one or more devices such as an ASIC, physical sensor, and/or controller. Modules can overlap; for example two modules can use the same processing function. Herein "logical module" and "logic module" can be used interchangeably.

Herein, "nodes" can be components such as devices, sensor devices, and controllers that are in communication with the interface, e.g. wired to the interface. The wired interface described herein can be for communication between separate devices, e.g. between a sensor device(s), a controller(s), and/or a controlled device(s). The wired interface can have two wires, for supporting the differential signals.

Herein, a controller can include a processor, SOC, ASIC, FPGA, or the like. Herein, a controller can be an electronic control unit (ECU). Herein, a controlled mechanical device can be a rotary device.

Herein a function can include multiple operations which may be referred to also as functions. Function, as used herein, can mean function(s), e.g. at least one function.

Herein, the terms second physical sensor, second ADC, second DSP, second protocol generator can refer to the respective physical sensor ADC, DSP, and protocol generator of a second sensor device.

Herein, communicative coupling may be with a twisted differential pair. Herein, the interface can be a differential interface, e.g. an interface that supports a transmission of a differential signal and/or Manchester signal.

Herein, angular position can be used interchangeably with phase.

Herein the transmission of a differential signal include transmitting message parts from multiple nodes. For example, a transmitted differential signal can include a transmitted differential signal from a controller and a transmitted differential signal from each of at least one sensor. The transmitted signal can include the transmitted signal of the nodes of the system (e.g. the controller and the sensor device(s)).

The sensor devices, controller, communication system, and relate method of communication can be in electric vehicles.

Herein, the prefix "0b" may be used to indicate a base-2 number.

Herein, a differential signal can be any signal that is received or sent on a two-wire interface. For example, Manchester encoded data can be sent over a two wire interface, making the signal of Manchester encoded data a differential signal.

Herein, "communicatively coupleable" can mean coupleable by wire, e.g. a wired interface.

Herein, the figures are for illustration and/or to aid understanding of various embodiments of the sensor device, controller, communication system, and methods related to the functioning thereof. Embodiments textually described herein can differ from the embodiments shown in the figures. In describing an embodiment, herein, the description may refer to features of figures. The constellation of features, of the textually described embodiment, may differ from the exact constellation of features depicted in the referenced figures.

A list of reference numerals used herein is provided for convenience and is not intended to be limiting.

**REFERENCE NUMERALS**

| | |
|---|---|
| communication system | 100 |
| sensor device | 101 |
| second sensor device | 102 |
| | |
| sensor input module, such as a magnetic sensor | 111 |
| | |
| second input module | 112 |
| processing module | 121 |
| second processing module | 122 |
| communication module | 131 |
| second communication module | 132 |
| controller | 140 |
| logic module | 141 |
| second logic module | 142 |
| interface | 150 |
| sensor input | 1601 |
| sensor input (2) | 1602 |
| Manchester encoded data | 1701 |
| Manchester encoded data | 1702 |
| | |
| differential Manchester encoded data (transmitted) | 180 |
| | |
| differential Manchester encoded data (received) | 181 |
| | |
| controlled mechanical device such as a rotary device | 190 |
| memory of sensor device | 191 |
| stored function | 191f |
| stored processed data | 191p |
| stored function | 192f |
| stored processed data | 192p |
| memory of second sensor device | 192 |
| sensor assembly | 200 |
| physical sensor | 210 |
| second physical sensor | 212 |
| ADC | 220 |
| second ADC | 222 |
| DSP | 230 |
| second DSP | 232 |
| protocol generator | 240 |
| second protocol generator | 242 |
| operational cycle | 300 |
| data acquisition duration | 310 |
| trigger | 320 |
| data transmission duration | 330 |
| method of wired communication | 400 |
| acquire data | 410 |
| determine measurement(s) | 420 |
| transmit measurement(s) | 430 |
| redundancy check | 440 |
| transmit error code | 450 |
| trigger | 460 |
| compare | 470 |
| transmit control signal | 480 |
| controller transmission | 500 |
| timing trigger | 510 |
| identification | 520 |
| command | 530 |
| handover | 540 |
| sensor device transmission | 600 |
| sync | 610 |
| ID | 620 |
| status | 630 |
| data | 640 |
| counter | 650 |
| handover | 660 |
| second sensor device transmission | 700 |
| sync | 710 |
| ID | 720 |
| status | 730 |
| data (CRC) | 740 |
| handover | 750 |
| communication method | 800 |
| determine measurement(s) (1) | 810 |
| determine measurement(s) (2) | 820 |
| receive measurement(s) | 830 |
| compare measurements (1) (2) | 840 |
| determine error code | 850 |
| transmit error code | 860 |
| determine CRC by controller | 870 |
| compare CRCs | 880 |
| determine control signal | 890 |
| method of operation of a sensor device | 900 |
| receive a command | 910 |
| determine a function | 920 |
| | |
| Manchester encoded data transmission | 1009 |
| falling edge encoding a 0 | 1019 |
| rising edge encoding a 1 | 1020 |
| additional rising edge | 1030 |
| additional falling edge | 1040 |
| Manchester encoded data transmission | 1109 |
| bits | 1210 |
| | |
| differential Manchester encoded data stream | 1220 |
| | |
| Diagnostic frame | 1230 |
| phase data frame | 1240 |
| rising edge on first wire | 1235 |
| falling edge on second wire | 1245 |
| rising edge on second wire | 1250 |
| falling edge on first wire | 1260 |
| intervening rising edge (second wire) | 1270 |
| intervening falling edge (first wire) | 1280 |
| intervening rising edge (first wire) | 1290 |
| intervening falling edge (second wire) | 1291 |
| | |
| first trace of differential Manchester encoded data | 1310 |
| | |
| second trace of differential Manchester encoded data | 1320 |
| | |
| differential Manchester encoded 0b1 | 1330 |
| rising edge of second trace of 0b1 | 1332 |
| falling edge of first trace of 0b1 | 1334 |
| differential Manchester encoded 0b0 | 1340 |
| rising edge of second trace of 0b0 | 1344 |
| falling edge of first trace of 0b0 | 1342 |
| high voltage region, or dominant state | 1350 |

## Claims

1. A sensor device (101), for a controlled mechanical device (190), comprising:
a logic module (141) and a communication module (131); wherein
the logic module (141) is configured to process sensor input (1601) and pass Manchester encoded data (1701), determined by processing the sensor input (1601), to the communication module (131); and
the communication module (131) is configured for:
transmitting differential Manchester encoded data (180) onto a wired interface (150), the differential Manchester encoded data (180) being based on the Manchester encoded data (1701) from the logic module (141); and
receiving differential signals (180) from the wired interface (150).

2. The sensor device of claim 1, wherein
the communication module (131) includes a differential transceiver.

3. The sensor device of claim 2, wherein
the differential transceiver is a CAN transceiver, a low voltage differential signaling transceiver, a FlexRay transceiver, or an RS-485 transceiver.

4. The sensor device (101) of claim 1, 2, or 3, wherein
the sensor device (101) is communicatively coupleable to a position sensor (111), such as at least one of: a resolver, a hall sensor, or a magnetoresistance sensor; and
the sensor device (101) is configured to receive the sensor input (1601) from the position sensor (111).

5. The sensor device (101) of claim 4, further comprising
the sensor device (101) is communicatively coupleable to the at least one magnetoresistance sensor; such as at least one of an anisotropic magnetoresistance sensor, a giant magnetoresistance sensor, or a tunnel magnetoresistance sensor.

6. The sensor device (101) of any one of claims 1-5, configured to:
transmit the differential Manchester encoded data (180), which includes:
a measurement determined (810) at least partially by the sensor input (1601); or
an error code (860).

7. The sensor device (101) of claim 6, configured to
receive a command (530, 910) from the external device (140); wherein
the sensor device (101) is configured to determine (920) at least one function (191f, 192f) of the sensor device (101) based on the command; wherein
the at least one function (191f, 192f) includes any one or more of:
determining the measurement (420, 810, 820) based on the sensor input (1601);
determining the error code (850) based on a comparison of the measurement (840) of the sensor device (101) and a second measurement of second sensor device (102);
determining a phase of a rotating device; and
determining an error code (850) based on a comparison (840) of the phase and a second phase of the rotary device determined by a second sensor device (102).

8. A controller (140) for a controlled mechanical device (190), the controller (140) configured for wired communication, including:
transmitting differential Manchester encoded data (181), as transmitted differential Manchester encoded data (181), onto a wired interface (150), and
receiving (830) differential Manchester encoded data (180), as received differential encoded data (180), over the wired interface (150), from a first sensor (101) and a second sensor (102); wherein
the controller (140) is configured to determine (890) and transmit a control signal (480) for a controlled device (190);
the controller (140) is configured to identify, within the received differential Manchester encoded data (180), first differential signals coming from the first sensor (101) or second differential signals coming from the second sensor (102); and wherein
the control signal (500) is determined (890) based on
a measurement (830) of the controlled device (190), which is included in the first differential signals, and
an error code (860), which is included in the second differential signals.

9. The controller (140) of claim 8, further configured for:
transmitting a command (530) for setting at least one respective function (191f, 192f) of at least one of the first and second sensor (101, 102);
comparing (470) the measurement of the mechanical device (190) with a predicted value to determine a comparison; and
determining (890) the control signal (480) based on the comparison.

10. A communication system (100), for at least one of sensing or controlling a mechanical device (190), comprising:
a controller (140), coupled to a wired interface (150);
the sensor device (101) according to any one of claims 1 to 7, coupled to the wired interface (150); and
a second sensor device (102), coupled to the wired interface (150).

11. The communication system (100) of claim 10, wherein
the sensor device (101) is configured for determining the measurement (420, 810, 820) based on the sensor input (1601); and
the second sensor device (102) is configured for determining the error code (850) based on the comparison of the measurement (840) of the sensor device (101) and the second measurement of the second sensor device (102).

12. The communication system (100) of claim 10 or 11, further comprising at least one of:
the controlled mechanical device (190) or the magnetic sensor (111).

13. A method of communication (800), for at least one of sensing or controlling a controlled mechanical device (190), comprising:
transmitting (500) the command (530) from the external device which is a controller (140), via the wired interface (150), to the sensor device (101) according to any one of claims 6 to 7, and the second sensor device (102);
determining (810) the measurement by the sensor device (101) based on the sensor input (1601);
determining (850) the error code based on the comparison of the measurement (840) of the sensor device (101) and the second measurement of second sensor device (102);
transmitting, from the sensor device (101), the transmitted differential Manchester encoded data (180) that includes the measurement (430, 810); and
transmitting, from the second sensor device (102), the transmitted differential Manchester encoded data (180) that includes the error code (450, 860).

14. The method of communication (800) of claim 13, further comprising:
determining the function (920) of the sensor device (101) to include transmitting (640), from the sensor device (101), the transmitted differential signal (180) that includes the measurement;
determining the function (920) of the second sensor device (102) to include determining the error code (850) based on the comparison of the measurement (840) of the sensor device (101) and the second measurement of second sensor device (102).

15. The method of communication (800) of claim 13 or 14, comprising:
processing sensor input (1601), during an overlapping duration, by the sensor device (101) and the second sensor device (102), to determine the measurement (810) and the second measurement (820); and
performing a sequence of:
transmitting (640) the measurement by the sensor device (101),
subsequently transmitting (450) the error code by the second sensor device (102); and
determining (890) and transmitting (480) the control signal by the controller (140);
and
repeating the sequence.
